Europäisches Patentamt

(19) European Patent Office

Office européen des brevets

(11) Numéro de publication: **0 109 876**

**B1**

(12) **FASCICULE DE BREVET EUROPÉEN**

(45) Date de publication du fascicule du brevet:
08.04.87

(21) Numéro de dépôt: **83402071.1**

(22) Date de dépôt: **25.10.83**

(51) Int. Cl.⁴: **H 01 R 25/00,** H 02 G 3/04

(54) **Dispositif modulaire de distribution d'énergie électrique.**

(30) Priorité: 26.10.82 FR 8217879
17.06.83 FR 8310047

(43) Date de publication de la demande:
**30.05.84 Bulletin 84/22**

(45) Mention de la délivrance du brevet:
**08.04.87 Bulletin 87/15**

(84) Etats contractants désignés:
**AT BE CH DE GB IT LI LU NL SE**

(56) Documents cité:
**EP-A-0 009 151
DE-A-1 640 545
DE-A-2 915 363
FR-A-1 517 163
GB-A-556 482**

(73) Titulaire: **P.G.E.P. PROFESSIONAL GENERAL
ELECTRONIC PRODUCTS Société Anonyme, 130
rue Jean- Pierre Timbaud, F-92400 Courbevoie (FR)**

(72) Inventeur: **Nudelmont, Jean- Claude, 7, rue Soyer,
F-92200 Neuilly sur Seine (FR)**

(74) Mandataire: **Loyer, Bertrand, Cabinet Pierre Loyer
18, rue de Mogador, F-75009 Paris (FR)**

LIBER, STOCKHOLM 1987

## Description

La présente invention a pour objet un dispositif modulaire de distribution d'énergie électrique permettant de disposer sur un même support une pluralité de moyens de branchement électrique commandés par un organe de commande et/ou de sécurité commun.

Il est connu par exemple pour les prises de courant de réaliser des boîtiers contenant plusieurs socles femelles de prises de courant, ledit boîtier étant muni d'un fil électrique terminé par une prise mâle. Cette disposition permet de multiplier les prises de courant. D'autre part, ils sont difficilement utilisables dans des installations électriques ou électroniques importantes où l'on a besoin d'un grand nombre de prises de courant disposées dans des armoires, ou ce qu'on appelle des "baies" dont les dimensions sont normalisées.

Il est également connu de disposer deux conducteurs dans des rails le long desquels on fait coulisser des équipements tels que des douilles de lampes ou des prises de courant que l'on fixe par vissage en tout endroit désiré, cette fixation assurant les contacts électriques nécessaires à l'alimentation. Ces dispositifs s'avèrent assez mal commodes pour les particuliers et difficilement utilisables pour les professionnels.

La présente invention a pour but un dispositif modulaire permettant de disposer sur un même support autant de prises de courant que l'on désire, ces prises étant commandées par des organes de contrôle et de sécurité, le tout étant aux normes des baies, appelées "standard 19" par les professionnels et les prises pouvant elles-mêmes être à volonté réalisées suivant les diverses normes nationales : normes françaises (NF), normes allemandes ou DIN (VDE), normes américaines ou autres.

Le dispositif selon l'invention est caractérisé par le fait qu'il est constitué par : un assemblage de quatre éléments : un support de lames conductrices, un pontet isolant recouvrant le support, une lame conductrice de terre placée sur ledit pontet et un socle de connection normalisé; cet assemblage de quatre éléments étant enfilé par coulissement à l'intérieur du profilé dans laquel il est maintenu par des nervures ou gorges dudit profilé.

De préférence, le dispositif comporte des équipements accessoires tels que bouchons d'extrémités, caches intercalaires, et pattes de fixation.

A titre d'exemple non limitatif et pour faciliter la compréhension de l'invention, on a représenté aux dessins annexes :

Figure 1, une vue en élévation latérale d'un exemple de réalisation de l'invention ;

Figure 2, une vue en plan du dispositif de la figure 1 ;

Figure 3, une vue de détail en plan d'un élément modulaire support de lames conductrices ;

Figure 4, une vue en élévation latérale de la figure 3 ;

Figure 5, une vue en plan d'un pontet isolant destiné à s'emboîter sur le support de la figure 3 ;

Figure 6, une vue en élévation latérale en coupe selon I-I de la figure 5 ;

Figure 7, une vue en coupe selon II-II de la figure 5 ;

Figure 8, une vue à échelle agrandie de la lame conductrice de terre destinée à s'emboîter dans les nervures du pontet de la figure 5, dans laquelle les bornes de prise de terre ne sont pas montées ;

Figure 9, une vue en élévation de la figure 8, les bornes ayant été mises en place ;

Figure 10, une vue en plan d'un socle de prise de courant aux normes NF ;

Figure 11, une vue en coupe selon A-A de la figure 10 ;

Figure 12, une vue en plan correspondant à la figure 10 d'un socle de prise de courant aux normes VDE ;

Figure 13, une vue en plan d'une lame de contacts latéraux pour socle selon la figure 12 ;

Figure 14, une vue en élévation latérale de la figure 13 ;

Figure 15, une vue en plan d'un cache intermédiaire ;

Figure 16, une vue en coupe selon A-A de la figure 15 ;

Figure 17, une vue en coupe partielle à échelle agrandie illustrant les quatre éléments assemblés et enfilés dans le profilé ;

Figure 18, une vue partielle, en plan d'un deuxième mode de réalisation ;

Figure 19, une vue en coupe selon A-A de la figure 1 ;

Figure 20, une vue en plan avec arrachement partiel du dispositif des figures 1 et 2, le socle supérieur D ayant été enlevé ;

Figure 21, une vue en coupe d'une variante de réalisation du dispositif des figures 18 à 20.

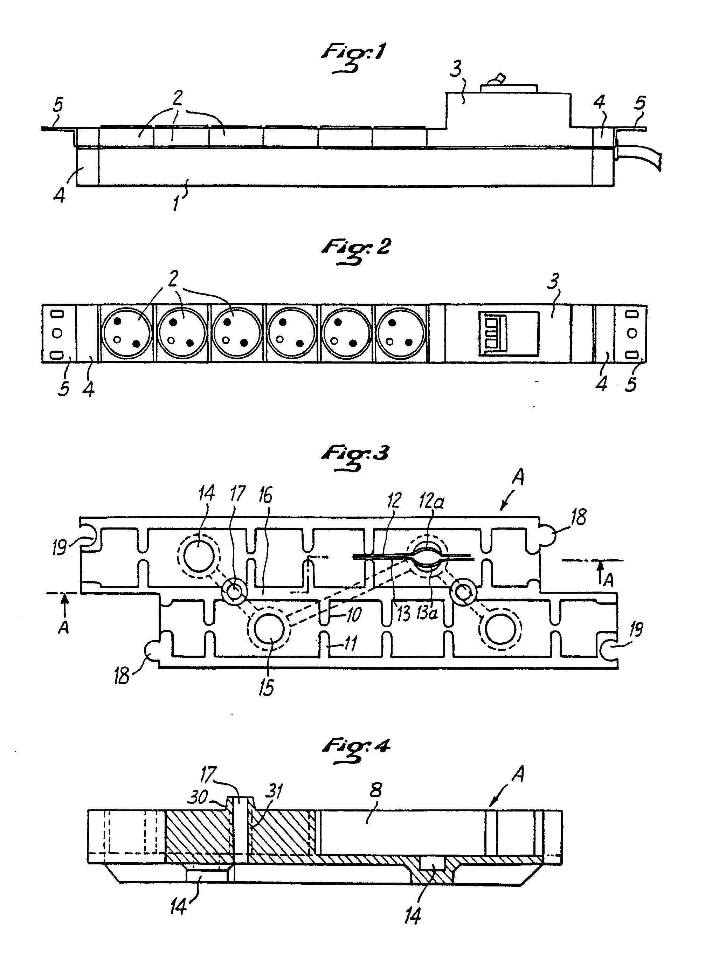

En se reportant à ces figures, on voit (figures 1 et 2) que le dispositif selon l'invention comporte un profilé 1, creux, faisant office de rail servant de support à une pluralité de socles de prises de courant 2 dont l'alimentation est commandée par un disjoncteur magnéto-thermique 3 entre autres, également porté par le profilé 1. A ses deux extrémités, le profilé 1 est muni d'embouts 4 et de pattes de fixation 5.

Le profilé 1 (figure 17) est un profilé en U dont les parois latérales sont munies de nervures de façon à maintenir un empilage de quatre éléments modulaires qui sont empilés et emboîtés les uns sur les autres et que l'on introduit à l'intérieur du profilé en U par une de ses extrémités pour ensuite les faire coulisser jusqu'à ce qu'ils viennent en butée contre l'organe 3 de commande et/ou de sécurité mis préalablement en place par tout moyen approprié.

Ledit organe 3 de sécurité et/ou de commande n'est pas décrit en détail car que ce soit un fusible double, un interrupteur, un disjoncteur magnéto-thermique ou autres, il s'agit d'un matériel connu qui ne fait pas partie de la présente invention. La fixation de cet appareil 3 dans le profilé 1 se fait, de manière également connue, au moyen d'un morceau de rail en oméga, placé en travers du profilé, sur les ailes latérales duquel viennent faire prise un évidement et un cliquet disposés sur la paroi inférieure dudit appareil 3.

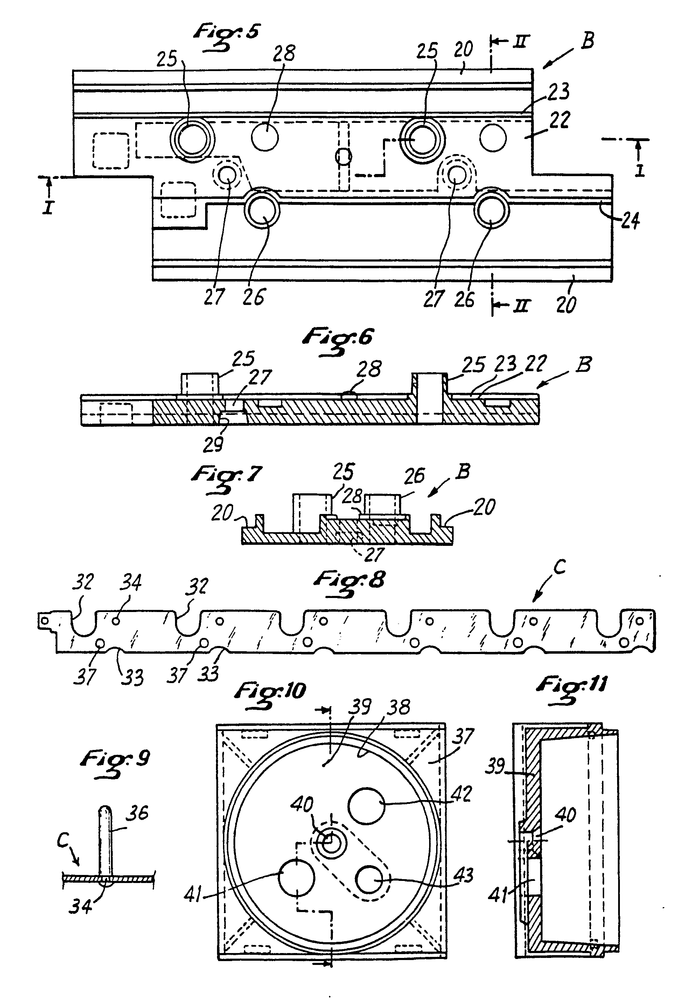

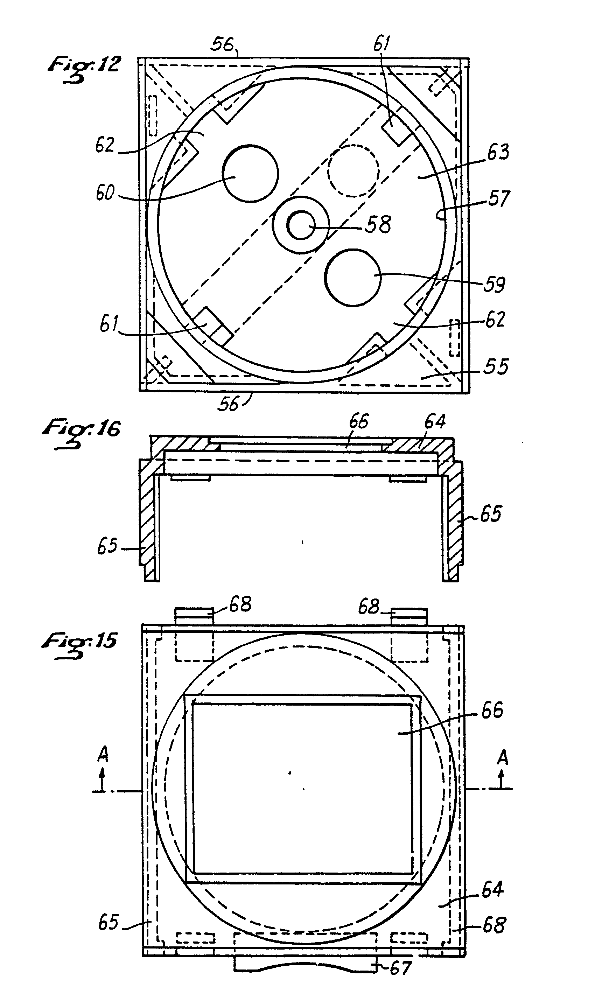

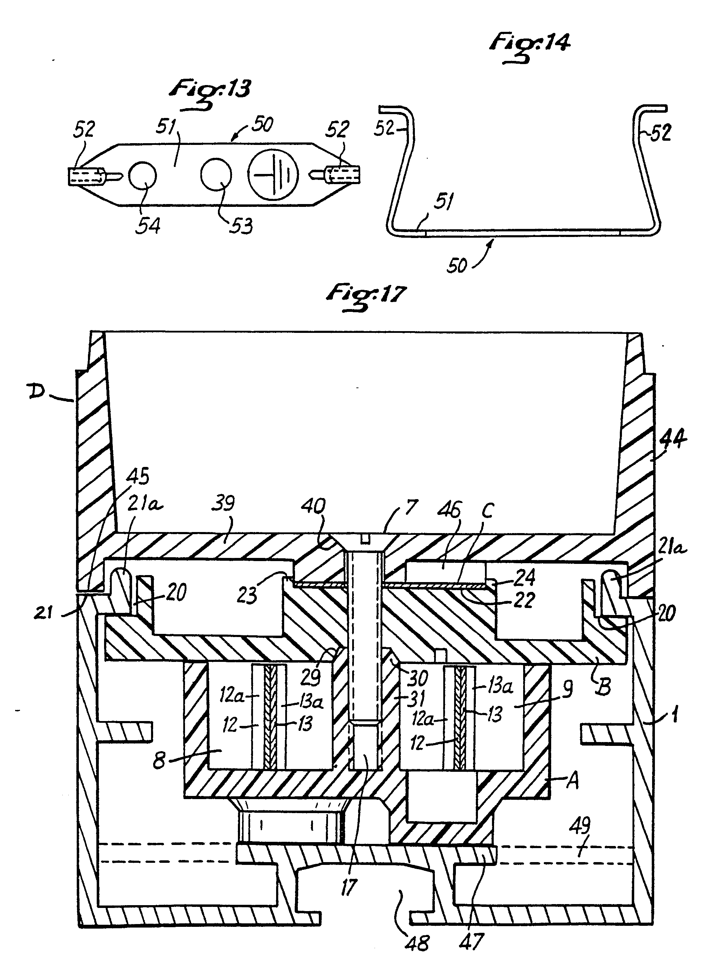

Les blocs modulaires qui sont enfilés à l'intérieur du profilé en U sont constitués par empilage, emboîtage et assemblage de quatre éléments : A, B, C, D ; l'élément A étant un support de lames conductrices (figures 3 et 4); l'élément B étant un pontet isolant recouvrant l'élément A (figures 5, 6, 7) ; l'élément C étant une lame conductrice de terre (figure 8), encastrée dans des nervures de la face supérieure du pontet B, cette lame pouvant recevoir soit la borne de contact de mise à la terre selon la norme NF (figure 9) soit les lames latérales selon la norme VDE (figures 13,14) ; l'élément D étant un socle de prise de courant qui vient en contact sur la lame conductrice C, ce socle pouvant être adapté aux différentes normes en vigueur dans les différents pays et dans les exemples représentés à titre non limitatif, aux normes NF (figures 10, 11) ou VDE (figure 12). Selon une variante (figures 14, 15) l'élément D peut être un simple cache intermédiaire, sur lequel on peut éventuellement monter un interrupteur ou un fusible du commerce.

Pour le montage et la fixation finales du dispositif, on réalise l'émpilage et l'emboîtage des éléments A, B, C puis on enfile cet empilage dans le profilé 1, ensuite on met en place l'élément D et au moyen d'une vis 7, on solidarise les uns aux autres les quatre éléments A, B, C, D, ce vissage provoquant également le serrage de l'ensemble sur le profilé 1 (figure 17).

Comme on le voit en détail sur les figures 3, 4 et 17, l'élément A est constitué de façon à comporter deux rainures parallèles 8 et 9 qui sont munies l'une et l'autre d'une multiplicité de petites nervures 10 et 11 disposées face à face : entre ces nervures 10 et 11 sont disposées deux lames conductrices 12 et 13 munies à intervalles réguliers des plis elliptiques 12a et 13a. Ces plis sont disposés sur les lames 12 et 13 de façon à ménager des volumes cylindriques à sections elliptiques à la verticale de bossages 14 et 15. Ces bossages 14 et 15 sont placés les uns 14 dans la rainure 8 et les autres 15 dans la rainure 9 par paires décalées à 45°, la distance les séparant étant celle des fiches mâles d'une prise de courant. A intervalles réguliers, la nervure centrale 16 qui sépare les deux rainures 8 et 9 comporte un orifice borgne 17 destiné à recevoir la vis de serrage 7 mentionnée précédemment. Comme cela est représenté à la figure 3, les deux rainures 8 et 9 sont décalées de 45° et comportent à leurs extrémités des tenons 18 et des mortaises 19 ; chaque rainure comporte deux volumes verticaux 12a, 13a pour recevoir les fiches mâles d'une prise de sorte que chaque élément A comporte deux paires de volumes verticaux 12a, 13a. Il y a un trou borgne 17 entre chaque paire de bossages 14 et 15. Chaque élément A constitue ainsi un élément modulaire qui peut être assemblé par les tenons et mortaises 18, 19 à un autre élément identique.

Comme on le voit en détail sur les figures 5, 6, 7 et 17 l'élément B est constitué de façon à correspondre à la forme de l'élément A. Cet élément B est une sorte de plaque en matériau isolant destinée à venir sur l'élément A. L'élément B comporte sur chacun de ses côtés un épaulement en creux 20 qui est destiné à venir s'encastrer dans un épaulement en saillie correspondant 21 ménagé sur les deux rebords latéraux supérieurs du profilé 1 (figure 17). En sa partie centrale, mais légèrement décalée par rapport à son axe longitudinal médian l'élément comporte à sa face supérieure une rainure 22 de faible profondeur, délimitée par deux petites nervures 23 et 24. Cette rainure 22 est destinée à recevoir la lame conductrice C qui sera décrite ci-après et qui est indiquée en pointillé sur la figure 5. A des emplacements qui correspondent à ceux des volumes 12a, 13a décrits précédemment, le pontet B comporte des saillies cylindriques de révolution creuses 25 et 26. Ces saillies cylindriques creuses 25 et 26 sont destinées à livrer passage aux fiches mâles d'une prise de courant. A des emplacements correspondant à ceux des trous borgnes 17 de l'élément A, le pontet B est traversé par des orifices 27 destinés à livrer passage à la vis de serrage 7. Il y a donc un orifice 27 entre chaque paire de saillies 25 et 26. De plus, un trou borgne 28 de faible profondeur est disposé dans la rainure 22 à l'emplacement que doit occuper selon la norme NF la borne de terre par rapport aux deux trous des fiches de contact qui doivent traverser les saillies cylindriques creuses 25 et 26. Ce trou borgne 28 a pour objet de laisser place au rivet de fixation de la borne de prise de terre. Chaque élément B ayant les mêmes dimensions qu'un élément A constitue avec celui-ci un élément modulaire. Sur la figure 17, on a représenté un élément B mis en place sur un élément A. Comme on peut le voir à la figure 17, on dispose de préférence à la base de l'orifice 27 un embrèvement conique 29 dans lequel vient s'engager l'extrémité supérieure conique 30 du fut cylindrique 31 dans lequel est ménagé le trou borgne 17 devant recevoir la vis 7. Ainsi, on obtient une position correcte de l'élément B sur l'élément A avant serrage.

La lame conductrice de terre, qui constitue l'élément C est représentée aux figures 8 et 9. Cette lame a une épaisseur légèrement inférieure à la profondeur de la rainure 22. Elle comporte à intervalles réguliers des échancrures 32 destinées à livrer passage aux saillies cylindriques 25, des échancrures 33 destinées aux saillies 26, des orifices 34 destinés à recevoir la base des bornes de terre 36 (figure 9) et des orifices 37 qui correspondent aux orifices 27 des éléments B et aux trous borgnes 17 des éléments A. Le positionnement correct de l'élément C sur l'élément B se fait par appui des échancrures 32 et 33 contre les rebords des saillies 25 et 26. Les têtes de rivet servant à la fixation des fiches 39 dans les orifices 34 se logent dans les trous borgnes 28 décrits précédemment. Dans l'exemple représenté aux figures 8 et 9 l'élément C n'est pas modulaire : il est destiné à être placé dans la rainure 22 d'un assemblage de trois modules A-B . Il est bien évident que l'on peut au choix employer des éléments C de longueur correspondant à un module AB ou bien des éléments C dont la longueur est un multiple de la longueur de ces modules. On peut faire de même pour les lames conductrices 12 et 13.

Les figures 10 et 11 représentent un élément D correspondant aux normes NF. Cet élément D est constitué par un plateau carré 37 traversé par un logement cylindrique 38 dont le fond 39 comporte quatre perçages 40, 41, 42 et 43. Le perçage central 40 est destiné à recevoir la vis d'assemblage 7 ; les perçages 41 et 42 sont destinés à venir s'emboîter sur les saillies cylindriques creuses 25 et 26, tandis que le perçage 43 est destiné à être traversé par la fiche de borne de terre 36. En se reportant plus particulièrement aux figures 11 et 17, on voit que l'élément D comporte également deux parois latérales 44 dont la base 45 vient reposer sur la paroi supérieure du repli du profilé 1 constituant l'épaulement 21, cet épaulement comportant une nervure 21a qui vient s'encastrer à l'intérieur de la partie inférieure 45 de chaque plaque latérale 44. Le fond 39 de l'élément D est placé à une hauteur suffisante des bases 45 pour laisser la place à la nervure 21a. De plus, le fond 39 comporte à sa face inférieure un bossage 46 venant appuyer sur la lame conductrice de terre C.

Pour le montage du dispositif ainsi décrit, on assemble entre eux autant d'éléments modulaires A que l'on veut avoir de paire de prises ; puis on met en place les lames conductrices 12-13 ; puis on pose sur les éléments A autant d'éléments B qui se positionnent par pénétration des parties coniques mâles 30 dans les embrèvements coniques 29 ; puis on place la lame C munie d'autant de bornes 36 qu'il y a de prises ; puis on enfile l'assemblage ainsi réalisé par une extrémité du profilé 1. Dans l'exemple représenté à la figure 17, on voit que les éléments A reposent par leur fond sur une réglette de glissement 47 placée au fond du profilé 1. Cette réglette 47 permet de ménager un volume 48 à contre-dépouille, un peu analogue à une mortaise destinée à rendre possible la fixation du profilé 1 sur un mur ou une paroi d'armoire par le procédé usuel d'écrou à tête noyée ; mais si ce mode de fixation n'est pas nécessaire la réglette 47 peut faire partie intégrante du fond 49 du profilé, représenté en pointillé.

Une fois les éléments A, B, C assemblés mis en place, on pose autant d'éléments D qu'il y a de socle prévu, c'est-à-dire autant qu'il y a de bornes 36, ou de paires de saillies 25 - 26, ou de paires de volumes 12a, 13a, et on met en place les vis 7. Le serrage des vis soulève légèrement les éléments A et B de sorte que les épaulements 20 des pontets B viennent se bloquer contre les épaulements 21 du profilé tandis que les bases 45 des éléments D viennent vers le bas se serrer contre les parois supérieures des replis du profilé 1 qui ménagent les épaulements 21.

L'ensemble est alors solidement maintenu en place par serrage sur le profilé 1.

Les figures 12 à 14 correspondent à une variante de réalisation de l'élément D correspondant aux normes VDE, appelées aussi normes DIN ou normes allemandes.

La figure 13 représente une languette à deux branches destinée à remplacer chaque borne 36 de la figure 9. Chaque languette 50 comporte une partie centrale 51 et deux branches symétriques 52. La partie centrale 51 comporte (figure 13) un perçage central 53 destiné à livrer passage à la vis 7 et un perçage 54 destiné à permettre un rivetage de la languette 50 sur l'orifice 34 de l'élément C. L'élément D représenté à la figure 12 comporte comme dans le cas précédent un plateau central carré 55 relié à deux plaques latérales 56 et traversé par un logement cylindrique 57 dont le fond 63 comporte : un perçage central 58 destiné à recevoir la vis d'assemblage 7 ; deux perçages 59 et 60 destinés à venir s'emboîter sur les saillies cylindriques 25 et 26 du pontet B et à laisser passer les fiches mâles d'une prise de courant ; plus deux perçages rectangulaires 61 destinés à laisser passer les branches 52 de la languette 50 et deux encoches 62 destinées à recevoir les saillies latérales des prises de courant aux normes VDE.

Les figures 15 et 16 représentent une autre variante de réalisation de l'élément D. Cet élément à les mêmes dimensions que les éléments D des deux cas précédents, il comporte un plateau carré 64 et deux parois latérales 65. Le plateau supérieur 64 peut être plein, sans aucune ouverture, de façon à constituer un cache recouvrant l'empilage des éléments A, B et C situés en-déssous ; un tel cache peut être disposé en deux éléments D comportant des socles de prises et constituer ainsi un cache intercalaire. Le plateau 67 peut également comporter comme cela est représenté aux figures 15 et 16 une ouverture centrale 66 de forme quelconque, rectangulaire dans l'exemple représenté destiné à permettre la fixation d'un appareillage électrique du commerce tel que, interrupteur, fusible, ou autre.

L'ouverture rectangulaire 66 permet la mise en place d'interrupteurs de type connu qui sont simplement enfoncés dans l'ouverture 66 et maintenus par clipsage.

Dans un tel cas, il n'est plus possible de fixer l'élément D au moyen de la vis d'assemblage 7. Pour réaliser cette fixation, on dispose de chaque coté de l'élément, d'une part un ergot de fixation 67 et d'autre part deux griffes élastiques 68. Ces griffes 68 et ergot 67 sont fixés à la paroi inférieure du plateau central 64 et viennent s'engager sous le plateau central 37, 55 ou 64 de l'élément D adjacent.

A la figure 17, on a représenté un profilé simple mais on peut dans le cadre de la présente invention réaliser un profilé multiple permettant de disposer côte à côte des assemblages A, B, C, D.

De préférence, le profilé 1 et les éléments D ont une largeur de 44 mm correspondant au "standard 19" (mais qui peut varier pour d'autre standard).

Dans les exemples représentés, on a décrit des socles de prises de courant (élément D) qui sont soit aux normes NF, soit aux normes VDE mais on voit que l'invention permet d'adapter sur l'assemblage A, B, C n'importe quel type de socle correspondant à n'importe quelle norme en vigueur dans les différents pays. On voit ainsi que le dispositif selon la présente invention peut être adapté aux normes de n'importe quel pays, ce qui lui confère un avantage pratique considérable qu'aucun appareillage électrique actuellement connu ne possède.

Le dispositif de commande ou de sécurité 3 placé en bout du profilé commande l'alimentation des lames conductrices 12 et 13.

Aux figures 1 et 2, on a représenté un dispositif comportant une pluralité de socles de prises aux normes NF placés côte à côte, le dispositif ainsi décrit permet de faire toutes les variations de montage imaginables : on peut mettre les intercalaires où l'on veut et grouper ainsi les prises à volonté ; on peut dans un tel groupement intercaler des interrupteurs qui ne commandent que les prises placées en amont : on peut même, à condition de riveter aux endroits voulus des languettes 50 ou des bornes 36, disposer sur un même profilé 1 des prises aux normes NF et des prises aux normes VDE ou à d'autres normes.

Il faut également noter que lorsqu'on enlève un élément D, il n'y a aucun danger puisque toutes les parties actives, à savoir les lames 12 et 13 sont inaccessibles ; seul est apparent le contact de terre qui lui est inactif.

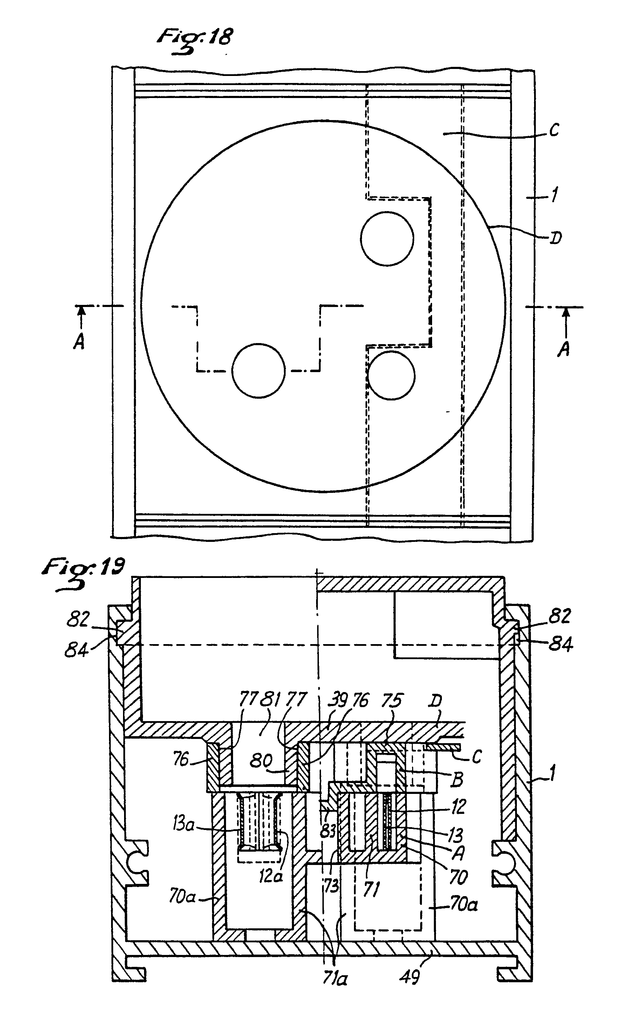

Les figures 18 à 20 représentent un autre mode de réalisation de l'invention, les mêmes éléments portant les mêmes références.

En se reportant à ces figures, on voit que comme dans le cas des figures 1 à 17, le dispositif est constitué par l'assemblage de quatre éléments A, B, C et D qui sont ensuite enfilés dans le profilé 1.

L'élément A constitue un support pour deux paires de lames conductrices 12 et 13, munies à intervalles réguliers de plis ou renflements 12a et 13a (figures 2 et 3), ces deux lames étant maintenues par des nervures 10 et 11 placées face à face.

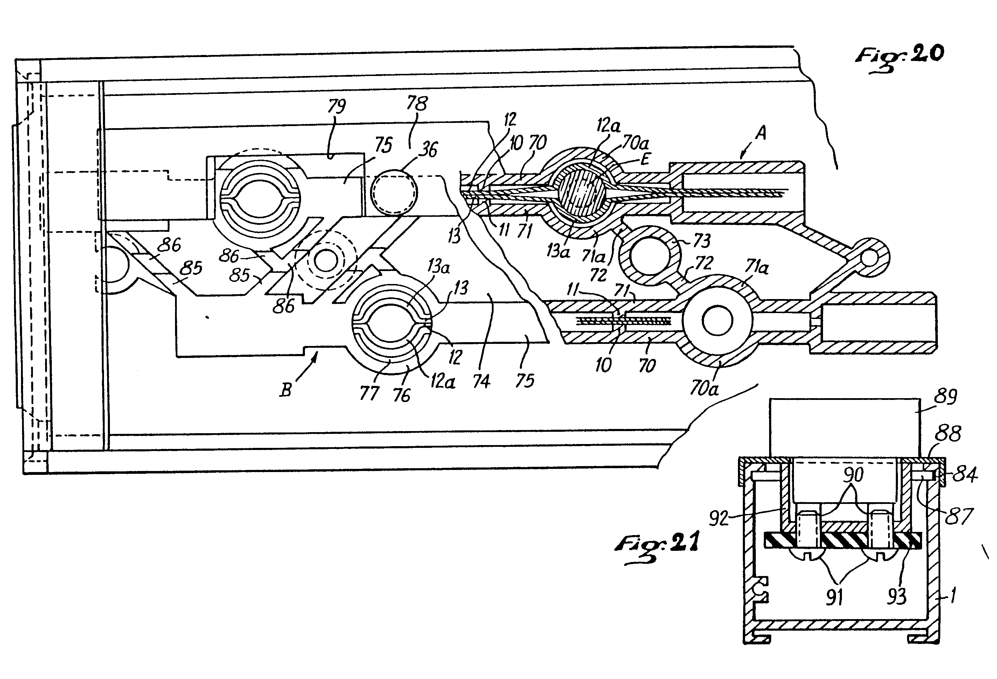

Les nervures transversales 10 et 11 sont ménagées sur deux nervures longitudinales symétriques 70 et 71, qui, à espacements réguliers, comportent des renflements 70a et 71a qui définissent un logement cylindrique pour les renflements 12a et 13a des lames conductrices. Ces renflements sont également destinés à recevoir les broches d'une prise de courant mâle, une telle broche ayant été représentée en E à la figure 20. Comme précédemment, les logements 70a, 71a (et les renflements 12a-13a) sont décalés à 45°, mais ils sont joints l'un à l'autre par une nervure 72 comprenant en son milieu un logement cylindrique 73, qui se trouve donc sur l'axe longitudinal médian du dispositif.

En se reportant à la demi-coupe de gauche sur la figure 19, on voit que les parois des renflements 70a et 71a sont prolongés vers le bas, jusqu'à la paroi de fond 49 du profilé 1.

De préférence, lesdits renflements 70a - 71a qui sont sur une même paire de nervures longitudinales sont reliés les uns aux autres par une nervure de raidissement.

Comme dans le premier mode de réalisation, le pontet B recouvre complètement le support A des lames conductrices 12 et 13, afin de les isoler électriquement ; cependant, ce pontet B a une forme légèrement différente. Comme on le voit aux figures 19 et 20, ce pontet comporte une partie centrale plane 74, portant deux nervures 75 dont la section est en forme de U inversé. Aux emplacements des logements cylindriques 70a - 71a, chacune des nervures 75 comporte un renflement cylindrique 76 percé d'un orifice 77. Comme cela sera décrit plus en détail ci-après, ces orifices 77 servent d'une part à permettre aux broches telles que E d'atteindre les lames 12 et 13 et d'autre part à permettre l'emboîtement des socles D sur le pontet B.

En se reportant à la demi-coupe de droite sur la figure 19, on voit que la face inférieure de la partie centrale 74 du pontet comporte des bossages 83. Ces bossages sont disposés, à intervalles réguliers de façon à correspondre aux logements 73 décrits ci-dessus. Ces bossages 83 sont destinés à s'emboîter dans les logements 73, ce qui permet de solidariser le pontet B au support A.

En se reportant aux figures 19 à 20, on voit que la lame conductrice de terre C est constituée par une barrette 78 de section rectangulaire, posée sur une des deux nervures 75 du pontet B et comportant à l'emplacement de l'orifice 77 une découpe rectangulaire 79. Les bornes de prises de terre 36 sont rivetées de place en place, comme dans le premier mode de réalisation. La lame C est également prise entre le pontet B et le socle D.

Comme cela est représenté à la figure 20, les deux nervures 75 du pontet B sont reliées l'une à l'autre par des nervures tranversales, obliques 85. A travers ces nervures 85 sont ménagés des passages 86, le long de l'axe longitudinal médian du pontet B. Ces passages peuvent servir de passage à un fil de terre ou barrette, non représenté, qui est mis dans cette position à la place de la lame C; ceci permet de souder ou de riveter sur ce conducteur de terre les étriers tels que les étriers 50, pour les prises aux normes VDE. On peut également y souder des petites pattes latérales reliant les broches 36.

La forme de ce socle est également légèrement différente. En se reportant aux figures 18 et 19, on voit que le fond 39 de chaque élément D comporte à l'emplacement de chaque logement cylindrique 70a - 71a, un logement cylindrique 81. Les renflements 12a - 13a des lames 12, 13 ; les logements cylindriques 70a - 71a ; les orifices 77 et les logements cylindriques 81 sont coaxiaux. Les parois 81 des logements 80 viennent s'engager à frottement dans les orifices 77, ce qui réalise l'assemblage des éléments D sur le pontet B. Comme le pontet B est assemblé au support A par emboîtement des bossages 83 dans les logements 73, les trois éléments A, B et D sont assemblés les uns aux autres avec pinçage de la lame C entre les éléments B et D, la vis 17 étant supprimée.

Les parois latérales des éléments D comportent chacune une nervure 82 qui vient s'engager dans une gorge correspondante 84 ménagée dans les parois latérales du profilé 1.

Ainsi, lorsque les quatre éléments A, B, C et D sont assemblés, on peut les enfiler par coulissement dans le profilé 1 et il est maintenu par les deux nervures 82.

En se reportant à la figure 21, on voit que la présence des deux gorges 84 permet de disposer, le cas échéant, une ou plusieurs traverses 87 qui est enfilée dans ces deux gorges par une extrémité du profilé 1. Cette traverse permet de fixer, au moyen d'une vis par exemple, un couvercle 88 sur le dessus du profilé. Ce couvercle peut servir de cache, mais il peut également servir de support pour des appareils particuliers, tels que prise de téléphone, prise d'antennes de télévision ou autres. Dans ce cas, l'équipement 89 est enfilé dans un orifice correspondant ménagé dans le couvercle 88, sa partie inférieure munie de deux logements filetés 90 destinés à recevoir des vis 91 est recouverte par une douille 92 ; de sorte que la paroi du couvercle 89 est prise entre les pièces 89 et 92. On peut avantageusement disposer une plaquette isolante 93, comportant des circuits imprimés, entre les têtes des vis 91 et la douille 92.

## Revendications

1. Dispositif de distribution d'énergie électrique permettant de disposer sur un support commun une pluralité de moyens de branchements électriques pouvant être commandés par un organe de commande et/ou de sécurité, du type comportant un profilé (1) de section rectangulaire à l'intérieur duquel sont disposées des lames conductrices (12, 13) comportant des bossages en creux symétriques permettant le passage de fiches de contact et au-dessus duquel sont placés des éléments de connexion normalisés (D), caractérisé par le fait qu'il est constitué par un assemblage de quatre éléments : un support (A) portant lesdite lames conductrices ; un pontet isolant (B) recouvrant ledit support (A) ; une lame conductrice de terre (C) placée sur ledit pontet (B) ; et un socle de connexion normalisé (D) ; cet assemblage desdits quatre éléments (A, B, C, D) étant enfilé par coulissement à l'intérieur du profilé (1) dans lequel il est maintenu par les nervures (21) ou gorges (84) dudit profilé.

2. Dispositif selon la revendication 1, dans lequel l'élément de connexion (D) est serré sur le pontet (B) par une vis de telle sorte que la nervure (21) dudit profilé (1) soit pincée entre ledit pontet (B) et l'élément de connexion (D).

3. Dispositif selon la revendication 1 ou 2, dans lequel l'élément support (A) comporte deux rainures parallèles (8, 9) munies chacune d'une pluralité de nervures (10, 11) disposées face à face, entre lesquelles sont placées deux lames conductrices (12, 13) sur lesquelles sont ménagés à intervalles réguliers des plis elliptiques (12a, 13a) définissant des volumes cylindriques destinés à recevoir les fiches de contact d'une prise de courant ; ces volumes (12a, 13a) étant décalés de 45° et espacés de la distance normalisée d'écartement des fiches de contact d'une prise de courant.

4. Dispositif selon la revendication 3, dans lequel les rainures (8, 9) comportent des bossages en creux (14, 15) placés en dessous des volumes (12a, 13a).

5. Dispositif selon la revendication 3 ou 4, dans lequel la nervure centrale (16) séparant les deux rainures (8, 9) comporte au milieu de la distance séparant deux bossages (14, 15) un orifice cylindrique borgne (17) destiné à recevoir la vis (7) de serrage et d'assemblage.

6. Dispositif selon l'une quelconque des revendications 2 à 5, dans lequel le pontet (B) est constitué de façon à correspondre à la forme de l'élément de support (A) qu'il doit recouvrir et est constitué par une plaque en matériau isolant comportant : sur chacun de ses côtés un épaulement en creux (20) destiné chacun à venir s'encastrer dans un épaulement en relief (21) ménagé par les replis latéraux du profilé (1) ; des orifices (27) correspondant aux orifices borgnes (17) de l'élément de support (A) ; des saillies cylindriques creuses (25, 26) correspondant aux volumes (12a, 13a) de l'élément de support (A) ; une rainure à fond plat (22) destinée à recevoir la lame conductrice de terre (C).

7. Dispositif selon l'une quelconque des revendications 2 à 6, dans lequel la lame (C) est une barrette conductrice venant se placer dans la rainure (22) du pontet (B) et comportant : des échancrures (32, 33) correspondant aux saillies (25, 26) du pontet (B) des orifices (34) pour la fixation des moyens de contact (36, 50) de terre ; et des orifices (37) pour le passage de la vis d'assemblage (7).

8. Dispositif selon la revendication 7, dans lequel la barrette (C) est munie de bornes cylindriques (36) de prise de terre pour prises aux normes NF.

9. Dispositif selon la revendication 7, dans lequel la barrette (C) est munie de languettes (50) à deux branches (52) pour prises aux normes VDE.

10. Dispositif selon l'une quelconque des revendications 2 à 9, dans lequel le socle (D) est constitué par un plateau carré (37, 55, 64) muni de deux plaques latérales (44, 56, 65) qui prennent appui par leur extrémité inférieure sur le bord supérieur des replis latéraux du profilé (1).

11. Dispositif selon la revendication 10, dans lequel le socle (D) constitue un socle de prise de courant et comporte un logement cylindrique creux (38, 57) dont le fond (39, 63) est muni : d'un orifice central (40, 58) pour la vis (7) d'assemblage ; d'une paire d'orifices (41-42, 59-60) venant s'emboîter sur les saillies cylindriques creuses (25, 26) de l'élément (B) et d'orifices (43, 61) pour le passage des conducteurs de terre (36, 52).

12. Dispositif selon la revendication 10, dans lequel le socle (D) constitue un cache intercalaire et comporte un ergot (67) et deux griffes (68) pour sa fixation aux replis du profilé (1).

13. Dispositif selon la revendication 10, dans lequel le socle (D) constitue un socle support pour tout appareillage électrique usuel et comporte un ergot (67) et deux griffes (68) de fixation.

14. Dispositif selon la revendication 3, dans lequel l'élément (A) support des lames conductrices comporte deux paires de nervures longitudinales (70, 71) symétriques, munies à intervalles réguliers de renflements (70a, 71a) définissant des logements cylindriques recevant les renflements (12a, 13a) des lames conductrices, lesdits logements cylindriques étant décalés à 45° et lesdites nervures longitudinales (70, 71) comportant des nervures transversales (10, 11) pinçant les lames conductrices (12, 13).

15. Dispositif selon la revendication 14, dans lequel les renflements cylindriques (70a-71a) d'une même paire sont reliés entre-eux par une nervure (72) comportant un logement cylindrique (73) destiné à recevoir un bossage (83) du pontet (B).

16. Dispositif selon les revendications 14 et 15, dans lequel le pontet (B) comporte une partie centrale, plane (74) portant deux nervures (75) dont la section est en forme de U inversé, chaque nervure (75) comportant, aux emplacements des logements cylindriques (70a-71a) du support (A) un renflement cylindrique (76) percé d'un orifice (77) destiné à recevoir une saillie cylindrique (80) du socle (D).

17. Dispositif selon la revendication 16, dans lequel la partie centrale (74) du pontet (B) comporte à sa face inférieure des bossages (83) destinés à s'engager dans les logements médians (73) du support (A).

18. Dispositif selon l'une quelconque des revendications 14 à 17, dans lequel l'élément (D) comporte à chaque emplacement correspondant aux logements cylindriques (70a-71a) du support (A) et aux orifices (77) du pontet (B) un logement cylindrique (80) dont les parois (81) s'engagent dans l'orifice (77) du pontet (B).

19. Dispositif selon la revendication 18, dans lequel les deux parois latérales de chaque élément supérieur (D) comporte une nervure (82) destinée à s'engager dans une gorge correspondante (84) ménagée sur les parois latérales du profilé (1).

20. Dispositif selon la revendication 19, dans lequel les éléments (A, B, C et D) sont assemblés les uns aux autres par emboîtement des bossages (83) du pontet (B) dans les logements médians (73) du support (A), par emboîtement des saillies cylindriques (80-81) des éléments (D) dans les orifices (77) du pontet (B), avec pinçage de la lame (C) entre le pontet (B) et les élements (D); l'assemblage ainsi réalisé étant enfilé dans le profilé (1) par une de ses extrémités et étant maintenu en place par les nervures latérales (82) des éléments (D) tout en appuyant sur le fond (49) dudit profilé (1) par l'extrémité inférieure des logements cylindriques (70a-71a) du support (A).

21. Dispositif selon l'une quelconque des revendications 14 à 20, caractérisé par le fait qu'il comporte une ou plusieurs traverses (87) permettant de coiffer la partie supérieure du profilé (1) par un couvercle (88).

22. Dispositif selon la revendication 21, dans lequel le couvercle (88) sert de support à des équipements électriques particuliers (89) avec, éventuellement, mise en place de circuits imprimés (93).

23. Dispositif selon l'une quelconque des revendications précédentes, dans lequel les éléments du support (A) et du pontet (B) sont modulaires et comportent des moyens d'accrochage les uns aux autres par des tenons (18) et mortaises (19).

24. Dispositif selon la revendication 23, dans lequel chaque élément modulaire comporte deux paires de moyens de contact.

25. Dispositif selon l'une quelconque des revendications 1 à 24, comportant à une extrémité du profilé un organe de commande et/ou de sécurité (3) commandant l'alimentation des lames conductrices (12, 13).

**Patentansprüche**

1. Vorrichtung zur Verteilung elektrischer Energie, die es gestattet, auf einem gemeinsamen Träger eine Mehrzahl von elektrischen Verzweigungsmitteln anzuordnen, die über ein Steuer- und/oder Sicherheitsorgan gesteuert werden können, von der Art, die ein Profil (1) von rechteckigem Querschnitt umfaßt, in dessen Inneren leitende Plättchen (12, 13) angeordnet sind, welche symmetrische Hohlräume umfassen, die den Durchgang von Kontaktstiften ermöglichen, und oberhalb dessen genormte Verbindungselemente (D) angeordnet sind, dadurch gekennzeichnet, daß sie durch eine Einheit von vier Elementen gebildet wird: einem Träger (A), der die leitenden Plättchen trägt; einer isolierenden Brücke (B), die den Träger (A) überdeckt; einem auf der Brücke (B) angeordneten Erdungsplättchen (C) und einem genormten Verbindungssockel (D), wobei diese Einheit der genannten vier Elemente (A, B, C, D) durch Hineinschieben in das Innere des Profils (1) eingeführt wird, in dem sie durch die Rippen (21) oder die Vertiefungen (84) des Profils gehalten wird.

2. Vorrichtung nach Anspruch 1, bei der das Verbindungselement (D) mittels einer Schraube derart auf der Brücke (B) befestigt ist, daß die Rippe (21) des Profils (1) zwischen der Brücke (B) und dem Verbindungselement (D) eingeklemmt ist.

3. Vorrichtung nach Anspruch 1 oder 2, bei der das Element (A) zwei parallele Nuten (8, 9) umfaßt, die jede mit einer Mehrzahl von einander gegenüberliegenden Rippen (10, 11) versehen sind, zwischen denen zwei leitende Plättchen (12, 13) angeordnet sind, auf denen elliptische Ausbiegungen (12a, 13a) in regelmäßigen Abständen vorgesehen sind, welche zylindrische Volumina definieren, die dazu bestimmt sind, die Kontaktstifte eines Stromabnahmesteckers aufzunehmen, wobei diese Volumina (12a, 13a) um 45o versetzt und in dem genormten Abstand für Kontaktstifte eines Stromabnahmesteckers beabstandet sind.

4. Vorrichtung nach Anspruch 3, bei der die Nuten (8, 9) Hohlräume (14, 15) umfassen, die unter den Volumina (12a, 13a) angeordnet sind.

5. Vorrichtung nach Anspruch 3 oder 4, bei der die mittlere Rippe (16), welche die beiden Nuten (8, 9) voneinander trennt, in der Mitte jenes Abstandes, der die beiden Hohlräume (14, 15) voneinander trennt, eine zylindrische Sacköffnung (17) umfaßt, die dazu bestimmt ist, die Befestigungs- und Zusammenbauschraube (7) aufzunehmen.

6. Vorrichtung nach einem der Ansprüche 2 bis 5, bei der das Element (B) eine Brücke ist, die derart gebildet ist, daß sie der Form des Elementes (A) entspricht, die sie überdecken soll, und bei der dieses Element durch eine Platte aus isolierendem Material gebildet wird, die auf jeder ihrer Seiten eine Hohlschulter (20), von denen jede dazu bestimmt ist, sich in eine vorspringende Schulter (21) einzufügen, die durch die seitlichen Umbiegungen des Profils (1) ausgespart wird, Öffnungen (27), die den Sacköffnungen (17) des Elementes (A) entsprechen, hohle zylindrische Vorsprünge (25, 26), die den Volumina (12a, 13a) des Elementes (A) entsprechen und eine Nut (22) mit flachem Boden, die dazu bestimmt ist, das Element (C) aufzunehmen, umfaßt.

7. Vorrichtung nach einem der Ansprüche 2 bis 6, bei der das Element (C) durch eine leitende Schiene gebildet wird, die sich in die Nut (22) des Elementes (B) einfügt und bogenförmige Aussparungen (32, 33), die den Vorsprüngen (25, 26) des Elementes (B) entsprechen, Öffnungen (34) zur Befestigung der Mittel für den Erdungskontakt (36, 50) und Öffnungen (37) für den Durchgang der Befestigungsschraube (7) umfaßt.

8. Vorrichtung nach Anspruch 7, bei der die Schiene (C) mit zylindrischen Klemmen (36) für eine Erdverbindung nach den französischen Normen für Verbindungen versehen ist.

9. Vorrichtung nach Anspruch 7, bei der die Schiene (C) mit Laschen (50) mit zwei Zweigen (52) für Verbindungen nach den VDE-Normen versehen ist.

10. Vorrichtung nach einem der Ansprüche 2 bis 9, bei der das Element (D) durch eine viereckige Platte (37, 55, 64) gebildet wird, die mit zwei seitlichen Platten (44, 56, 65) versehen ist, welche über ihr unteres Ende auf dem oberen Rand der seitlichen Umbiegungen des Profils (1) aufliegen.

11. Vorrichtung nach Anspruch 10, bei der das Element (D) einen Sockel für einen Stromabnehmerstecker bildet und eine hohle zylindrische Aufnahme (38, 57) umfaßt, deren Boden (39, 63) mit einer zentralen Öffnung (40, 58) für die Befestigungsschraube (7), mit einem Paar Öffnungen (41-42, 59-60), die sich in die hohlen zylindrischen Vorsprünge (25, 26) des Elementes (B) einfügen und mit Öffnungen (43, 61) für den Durchgang der Erdungsleiter (36, 52) versehen ist.

12. Vorrichtung nach Anspruch 10, bei der das Element (D) eine zwischengeschaltete Abdeckung bildet und eine Nocke (67) und zwei Klauen (68) zu seiner Befestigung an den Umbiegungen des Profils (1) umfaßt.

13. Vorrichtung nach Anspruch 10, bei der das Element (D) einen Trägersockel für jedes beliebige, gebräuchliche elektrische Gerät bildet und eine Nocke (67) und zwei Befestigungsklauen (68) umfaßt.

14. Vorrichtung nach Anspruch 3, bei der das Trägerelement (A) für die leitenden Plättchen zwei Paare von symmetrischen Längsrippen (70, 71) umfaßt, die in regelmäßigen Abständen mit Ausbauchungen (70a, 71a) versehen sind, welche zylindrische Aufnahmen definieren, die die Ausbauchungen (12a, 13a) der leitenden Plättchen aufnehmen, wobei die zylindrischen Aufnahmen um 45° versetzt sind und die Längsrippen (70, 71) Querrippen (10, 11) umfassen, welche die leitenden Plättchen (12, 13) einklemmen.

15. Vorrichtung nach Anspruch 14, bei der die zylindrischen Ausbauchungen (70a, 71a) ein und desselben Paares über eine Rippe (72) untereinander verbunden sind, welche eine zylindrische Aufnahme (73) umfaßt, die dazu bestimmt ist, einen Hohlraum (83) der Brücke (B) aufzunehmen.

16. Vorrichtung nach den Ansprüchen 14 und 15, bei der die Brücke (B) einen zentralen ebenen Teil (74) umfaßt, der zwei Rippen (75) trägt, deren Querschnitt eine umgekehrte U-Form aufweist, wobei jede Rippe (75) an den Stellen der zylindrischen Aufnahmen (70a-71a) des Trägers (A) eine zylindrische Ausbauchung (76) umfaßt, die von einer Öffnung (77) durchbrochen ist, die dazu bestimmt ist, einen zylindrischen Vorsprung (80) des Elementes (D) aufzunehmen.

17. Vorrichtung nach Anspruch 16, bei der der zentrale Teil (74) der Brücke (B) auf seiner unteren Fläche Hohlräume (83) umfaßt, die dazu bestimmt sind, sich in die mittleren Aufnahmen (73) des Trägers (A) einzufügen.

18. Vorrichtung nach einem der Ansprüche 14 bis 17, bei der das Element (D) an jeder den zylindrischen Aufnahmen (70a-71a) des Trägers (A) und den Öffnungen (77) der Brücke (B) entsprechenden Stelle eine zylindrische Aufnahme (80) umfaßt, deren Wände (81) sich in die Öffnung (77) der Brücke (B) einfügen.

19. Vorrichtung nach Anspruch 18, bei der die beiden Seitenwände jedes oberen Elementes (D) eine Rippe (82) umfassen, die dazu bestimmt ist, sich in eine entsprechende Vertiefung (54) einzufügen, die an den Seitenwänden des Profils (1) ausgenommen ist.

20. Vorrichtung nach Anspruch 19, bei der die Elemente (A, B, C und D) durch Einfügen der Hohlräume (83) der Brücke (B) in die mittleren Aufnahmen (73) des Trägers (A), durch Einfügen der zylindrischen Vorsprünge (80-81) der Elemente (D) in die Öffnungen (77) der Brücke (B) mit Einklemmen des Plättchens (C) zwischen der Brücke (B) und den Elementen (D) miteinander verbunden werden, wobei die so erhaltene Einheit über eines ihrer Enden in das Profil (1) hineingeschoben und durch die seitlichen Rippen (82) der Elemente (D) in dieser Stellung gehalten wird, wobei sie über das untere Ende der zylindrischen Aufnahme (70a-71a) des Trägers (A) auf dem Boden (49) des Profils (1) aufliegt.

21. Vorrichtung nach einem der Ansprüche 14 bis 20, dadurch gekennzeichnet, daß sie eine oder mehrere Querverbindungen (87) umfaßt, die es ermöglichen, den oberen Teil des Profils (1) mit einem Deckel (88) abzudecken.

22. Vorrichtung nach Anspruch 21, bei der der Deckel (88) als Träger für bestimmte elektrische Einrichtungen (89) dient, wobei gegabenenfalls gedruckte Schaltungen (93) vorgesehen werden können.

23. Vorrichtung nach einem der vorhergehenden Ansprüche, bei der die Elemente (A) und (B) als Module ausgeführt sind und Mittel zum gegenseitigen Zusammenfügen umfassen, die durch Zapfen (18) und Zapfenaufnahmen (19) gebildet werden.

24. Vorrichtung nach Anspruch 23, bei der jedes Modulelement zwei Paare von Kontaktmitteln umfaßt.

25. Vorrichtung nach einem der Ansprüche 1 bis 24, die an einem Ende des Profils ein Steuer- und/oder Sicherheitsorgan (3) umfaßt, das die Versorgung der leitenden Plättchen (12, 13) steuert.

**Claims**

1. An electrical energy distribution device allowing a plurality of electrical connection means to be arranged on a common base, which connections can be controlled by a control unit and/or a safety shut-off device, of the type including a profile (1) with a rectangular section inside which current-carrying plates (12, 13) are arranged including symmetrical hollow recesses allowing the passage of contact pins and above which standardized connection elements (D) are placed, characterised in that it is made up of an assembly of four elements: a base (A) bearing the said current-carrying plates; an insulating bar (B) covering the said base (A); a current-carrying earth plate (C) placed on the said bar (B); and a standardized connection base (D); this assembly of the said four elements (A, B, C, D) being attached, by sliding, to the interior of the profile (1) in which it is held by the projections (21) or recesses (84) of the said structural profile.

2. A device according to claim 1, in which the connection element (D) is restrained on the bar (B) by a screw with the result that the projection (21) of the said profile (1) is squeezed between the said insulating bar (B) and the connection element (D).

3. A device according to claim 1 or 2 in which element (A) includes two parallel grooves (8, 9), each equipped with a plurality of projections (10, 11) which are arranged opposite each other, between which two current-carrying plates (12, 13) are placed, on which elliptical curves (12a, 13a) are recessed at regular intervals defining cylindrical spaces which are designed to receive the contact pins of a socket; these spaces (12a, 13a) being staggered by 45° and spaced at the standardized distance for the separation of the contact pins of a socket.

4. A device according to claim 3, in which grooves (8, 9) contain hollow recesses (14, 15) situated below the spaces (12a, 13a).

5. A device according to claim 3 or 4, in which the central projection (18) separating the two grooves (8, 9) contains, at the mid-point of the distance separating two recesses (14, 15) a dummy cylindrical orifice (17) which is designed to receive the locking and assembly screw (7).

8. A device according to one of claims 2 to 5, in which element (B) is a bar made up in such a way that it corresponds to the shape of element (A) which it must cover and is made up of a board made of insulating material containing: on each of its sides, a recessed shoulder (20) each of which is designed to fit into a raised shoulder (21) which is provided by the lateral edges of the profile (1); orifices (27) corresponding to the dummy orifices (17) of element (A); hollow, cylindrical projections (25, 26) corresponding to spaces (12a; 13a) of element (A); and a groove with a flat bottom (22) which is designed to receive element (c).

7. A device according to one of claims 2 to 8 in which element (c) is a small, current-carrying plate which fits in groove (22) of element (B) and contains: scallopings (32, 33) corresponding to the projections (25, 26) of element (B): openings (34) for fixing of the earth contact (36, 50); and openings (37) for the passage of locking screw (7).

8. A device according to claim 7, in which the small bar (C) is equipped with earth terminals (36) for standard French connections.

9. A device according to claim 7, in which the small bar (C) is equipped with blade terminals (50) with two arms (52) for connections with standard V.D.E.S.

10. A device according to one of claims 2 to 9 in which element (D) is made up of a square plate (37, 55, 64) which is equipped with two lateral boards (44, 56, 65), the lower edges of which rest on the upper edge of the lateral edges of profile (1).

11. A device according to claim 10, in which element (D) is made up of a socket base and includes a hollow counterbore (38, 57) of which the bottom (39, 63) is equipped; with a central orifice (40, 58) for the machine screw (7); with a pair of orifices (41 to 42, 59 to 60) which fit on the hollow cylindrical projections (25, 26) of element (B) and with orifices (43, 61) for leading earthed conductors (36, 52) through.

12. A device according to claim 10, in which element (D) is made up of an inserted screen and includes a catch (67) and two claws (68) in order for it to be fixed to the edges of profile (1).

13. A device according to claim 10, in which element (D) is made up of a supporting base for any conventional switch gear and control gear and includes a catch (67) and two claws (68) for fixing.

14. A device according to claim 3, in which base element (A) of the current-carrying plates includes two pairs of longitudinal projections (70, 71) which are symmetrical, and which are equipped at regular intervals with bulges (70a, 71a) defining counterbores receiving the curves (12a, 13a) of the current-carrying plates, the said counterbores being staggered by 45° and the said longitudinal ribs (70, 71) including transversal projections (10, 11) which squeeze the current-carrying plates (12, 13).

15. A device according to claim 14, in which cylindrical bulges (70a, 71a) of a given pair are linked to each other by a rib (72) including a counterbore (73) which is designed to receive a boss (83) of bar (B).

16. A device according to claims 14 and 15, in which bar (B) includes a plane, central part (74) bearing two ribs (75) the section of which is in the shape of an inverted (U), each rib (75) including, at the positions of counterbores (70a, 71a) of base (A), a cylindrical projection (76) which is cut through by an orifice (77) designed to receive a cylindrical projection (80) of element (D).

17. A device according to claim 16, in which the central part (74) of bar (B) contains, on its lower side, bosses (83) which are designed to latch into central seats (73) of base (A).

18. A device according to one of claims 14 to 17, in which element (D) includes, at each site corresponding to counterbores (70a -71a) of base (A) and to orifices (77) of bar (B), a counterbore (80) of which the sides (81) latch into orifice (77) of bar (B).

19. A device according to claim 18, in which the two lateral sides of each upper element (D) include a rib (82) which is designed to latch into a corresponding groove (84) which is recessed on the lateral sides of profile (1).

20. A device according to claim 19, in which elements (A, B, C and D) are assembled onto each other by fitting bosses (83) of bar (B) in central seats (73) of base (A) by fitting cylindrical projections (80-81) of elements (D) in orifices (77) of bar (B) by squeezing the blade (C) between bar (B) and elements (D); the assembly which is thus achieved is attached into profile (1) by one of its edges and is held in place by lateral ribs (82) of elements (D) whilst resting on the bottom (49) of the said profile (1) by the lower edge of counterbores (70a-71a) of base (A).

21. A device according to one of claims 14 to 20, characterised in that it contains one or more cross pieces (87) which make it possible for the upper part of profile (1) to be covered over by a covering cap (88).

22. A device according to claim 21, in which covering cap (88) serves as a base for particular electrical accessories (89) with, optionally, the fitting of printed circuits (93).

23. A device according to one of the preceding claims, in which elements (A) and (B) are modular and include means which enable them to be hooked to each other by hooks (18) and notches (19).

24. A device according to claim 23, in which each modular element includes two pairs of contact means.

25. A device according to one of claims 1 to 24, including, at an edge of the profile, a control unit and/or a safety shut-off device (3) controlling the power supply to current-carrying plates (12, 13).

**Fig:1**

**Fig:2**

**Fig:3**

**Fig:4**

*Fig.5*

*Fig.6*

*Fig.7*

*Fig.8*

*Fig.9*

*Fig.10*

*Fig.11*

Fig.12

Fig.16

Fig.15

5

Fig.13

Fig.14

52  51  50  52

54  53

52  52

51

50

Fig.17

D

45
21a  39  40  7  46  C  44

20  21a

21  23  24  22  20

29  30  9  B

12a  30  13a
12  31  13  1
8  12a  13
12  A

49

17  48  47

*Fig.18*

*Fig.19*

9

Fig. 20

Fig. 21

0 109 876